# EUROPÄISCHE PATENTSCHRIFT

(11) **EP 1 990 941 B1**
(45) Veröffentlichungstag und Bekanntmachung des Hinweises auf die Patenterteilung: **10.05.2017**
(21) Anmeldenummer: 08150038.1
(22) Anmeldetag: 04.01.2008
(51) Int. Cl.: H04L 29/06, H04L 1/00, H04L 29/08, H04W 28/06, H04W 88/02

(54) **Anordnung und ein Verfahren zur sicheren Datenkommunikation über ein nicht sicheres Netzwerk**
Assembly and method for secure data communication over an unsecured network
Agencement et procédé destinés à la communication de données par un réseau non sécurisé

(30) Priorität: 08.01.2007 AT 312007
(43) Veröffentlichungstag der Anmeldung: 12.11.2008
(73) Patentinhaber: Bernecker+Rainer Industrie-Elektronik Gesellschaft MbH, 5142 Eggelsberg (AT)
(72) Erfinder: Bernecker, Erwin, 5122, Hochburg (AT); Rainer, Josef, 5131, Franking (AT); Wimmer, Johann, 5144, Handenberg (AT)
(74) Vertreter: Patentanwälte Pinter & Weiss OG

(56) Entgegenhaltungen:
- EP-A- 1 605 641
- WO-A1-02/098077
- US-A- 5 936 965
- US-A1- 2005 169 305
- US-A1- 2006 072 538
- US-B1- 6 236 647
- US-B1- 6 891 850

## Beschreibung

Die gegenständliche Erfindung betrifft eine Anordnung und ein Verfahren zur sicheren Datenkommunikation über ein nicht sicheres Netzwerk mit einem Netzwerkprotokoll, das ein netzwerkprotokollspezifisches Datenpaket mit Nutzdaten des Netzwerkprotokolls und mit netzwerkprotokollspezifischen Daten definiert, wobei sichere Daten Nutzdaten eines Sicherheitsprotokolls und Daten gemäß den Spezifikationen des Sicherheitsprotokolls, womit Fehlererkennungs- und Fehlerkorrekturmechanismen zur Gewährleistung der sicheren Datenkommunikation implementiert werden, enthalten und die sicheren Daten als Nachricht des Sicherheitsprotokolls übertragen werden, wobei die sicheren Daten gekapselt im Netzwerkprotokoll über das nicht sichere Netzwerk von einem sicheren Datensender an einen sicheren Datenempfänger gesendet werden.

Die einzelnen Komponenten moderner Automatisierungssysteme kommunizieren über Netzwerke (die in diesem Gebiet oftmals auch Feldbusse genannt werden) gemäß bestimmter spezifizierter (und teilweise genormter) Protokolle, wie z.B. Ethernet, CAN, ProfiBus, Common Industrial Protocl (CIP), Ethernet Powerlink, etc., miteinander. Diese Netzwerke und Protokolle gewähren jedoch keine sichere Datenkommunikation, z.B. gemäß IEC 61508 SIL 3, sodass gesendete Daten unkorrumpiert beim Empfänger ankommen bzw. korrumpierte Nachrichten als solche erkannt und korrigiert werden können. Solche sicheren Kommunikationswege sind insbesondere dort notwendig, wo fehlerhafte oder falsche Daten Gefahr für die menschliche Gesundheit oder das menschliche Leben haben können. Typische Beispiele, wo eine sichere Datenkommunikation zwischen einem Sender, z.B. ein Sensor (Druck, Temperatur, etc.), und einem Empfänger, wie ein Steuergerät, ein Ventil oder ein Aktuator, notwendig sind, sind z.B. ein Not-Stop-Schalter (Sensor), der über einen Schalter (Aktuator) einen Stromkreis unterbricht oder eine Lichtschranke, die bei Auslösen eine Maschine abschaltet.

In der Vergangenheit wurden solche sicheren Kommunikationswege oftmals separat und einzeln verdrahtet, was eine Kommunikation über ein unsicheres Netzwerk überflüssig machte. Solche Anordnungen waren, vor allem bei großen Automatisierungssystemen, aber aufgrund des Verdrahtungsaufwandes teuer und komplex, was insbesondere auch die Wartung schwierig gestaltete.

Daher wurden in den letzten Jahren auch sichere Protokolle für eine sichere Datenkommunikation über ein Netzwerk entwickelt, die entsprechende an sich bekannte Fehlererkennungs- und Fehlerkorrekturmechanismen, wie z.B. Redundanzdaten, Zähler, Datendopplung, etc., enthalten, die eine sichere Kommunikation im Sinne eines bestimmten genormten Safety Integration Levels (SIL), wie SIL 3, gewährleisten. Die Nachrichten des sicheren Protokolls werden dabei gekapselt mit einem an sich nicht sicheren Netzwerkprotokoll, wie z.B. Ethernet, oder CAN, über ein nicht sicheres Netzwerk, wie z.B. über eine Modemverbindung, LAN, WAN, VPN, etc., übertragen. Die Sicherheitsmechanismen des sicheren Protokolls, das in das Protokoll der nicht sicheren Netzwerkübertragung gekapselt ist, gewährleisten dabei die Datenintegrität und -sicherheit der Datenkommunikation. Solche Anordnungen zur sicheren Datenübertragung über ein nicht sicheres Netzwerk werden z.B. in der US 6 891 850 B1 oder der WO 01/46765 A1 beschrieben. Die darin beschriebenen Verfahren und Anordnungen zur sicheren Datenkommunikation basieren auf einer 1:1-Beziehung zwischen Sicherheitsframe und Netzwerkprotokollframe, d.h. in einer Netzwerknachricht ist immer eine sichere Nachricht gekapselt. Die Möglichkeiten des Netzwerkes zur Übertragung von Daten werden dadurch nur bedingt oder unzureichend ausgenutzt.

In sicheren Automatisierungssystemen sind aber auch entsprechend kurze Reaktionszeiten erforderlich, denn es ist nicht zielführend, eine zwar sichere Kommunikation gewährleisten zu können, wenn diese Kommunikation aber zu lange dauert, sodass nicht mehr rechtzeitig auf bestimmte Ereignisse reagiert werden kann. Die Übertragungszeiten von Daten im Netzwerk müssen somit zuverlässig kurz sein, z.B. im Bereich von wenigen hundert µs wie bei Ethernet Powerlink. Bei der sicheren Datenkommunikation wird die Situation noch verschärft, da ja ein sicheres Protokoll in einem nicht sicheren Protokoll gekapselt wird und sich durch den Overhead der Datenkapselung die für die sicheren Nutzdaten verfügbare Bandbreite des Netzwerkes reduziert. Umso wichtiger ist es hier, kurze Übertragungszeiten über das Netzwerk zu erzielen und vor allem auch sicherzustellen. Weiters hat jedes Netzwerk auch eine natürliche Bandbreite, die die übertragbare Datenmenge pro Zeiteinheit bestimmt und somit ebenfalls eine Begrenzung der Übertragungsgeschwindigkeit darstellt. Diese Bandbreite ist aber nicht beliebig nutzbar, sondern jedes Protokoll spezifiziert ein Datenpaket (eine Nachricht) mit einer bestimmten Anzahl von Nutzdaten und einer Anzahl von protokollspezifischen Daten (wie z.B. Header, Frameabschluss, Statusdaten, Diagnosedaten, CRC, Zähler, etc.). Die bekannten sicheren Datenkommunikationssysteme nehmen darauf aber keine Rücksicht, sodass die (theoretisch) verfügbare Bandbreite nicht optimal ausgenutzt wird, was die Übertragungszeiten von Daten reduzieren kann. Diese Problematik wird aber mit den ständig wachsenden Automatisierungssystemen mit immer größeren Anzahlen von sicheren und nicht sicheren I/O-Einheiten (wie Aktuatoren, Sensoren) und Steuereinheiten, die über das gleiche nicht sichere Netzwerk miteinander kommunizieren, immer gravierender, da die Anzahl der über das Netzwerk laufenden Datenpakete damit ständig zunimmt und die Bandbreite der Datenübertragung entsprechend ausgenutzt wird.

Aus der nicht sicheren Datenkommunikation ist es bekannt, Nachrichten auf mehrere Frames aufzuteilen oder mehrere Nachrichten in einem Frame zusammenzufassen. Beispiele dafür sind die EP 1 605 641 A1, die US 6 236 647 B1, die US 2005/0169305 A1 und die US 5 936 965 A. In einer nicht sicheren Datenkommunikation ist das auch problemlos, da eine korrumpierte Nachricht keinen Schaden anrichten kann - die Nachricht wird eben gegebenenfalls nochmals versendet, was aber wiederum für erhöhten Datenverkehr sorgt und die Situation für die sichere, zeitkritische Datenkommunikation aber weiter verschlimmert.

Die US 2006/0072538 A1 zeigt ein Verfahren zur Übertragung von Datenpaketen über eine nicht sicheres Netzwerk, wobei die Datenpakete in einer Anwendungsschicht erzeugt werden und einen Header, Nutzdaten und Daten zur Fehlererkennung enthalten. Die erzeugten Datenpakete werden direkt an die physikalische Schicht übergeben und dort auf mehrere Pakete der physikalischen Schicht aufgeteilt und so über den physikalischen Kanal des Netzwerks übertragen. Damit sorgt die physikalische Schicht des nicht sicheren Netzwerks selbst für eine bestmögliche Auslastung des physikalischen Übertragungskanals. Eine Optimierung des Datenverkehrs auf einer höheren Ebene ist hierbei überhaupt nicht notwendig.

Es ist daher eine Aufgabe der gegenständlichen Erfindung, die im Netzwerk verfügbare Bandbreite der Datenübertragung für eine sichere Datenkommunikation über das Netzwerk möglichst optimal auszunutzen und kurze Übertragungszeiten von sicheren Daten zu gewährleisten.

Diese Aufgabe wird erfindungsgemäß durch die Merkmale der unabhängigen Ansprüche gelöst. Damit wird sichergestellt, dass eine Einrichtung, die Kenntnis vom implementierten Netzwerkprotokoll hat, die sicheren Daten optimal in Datenpakete umwandelt, die mit bestmöglicher Ausnutzung der verfügbaren Bandbreite über das Netzwerk übertragen werden können. Das den sicheren Daten zugrunde liegende Sicherheitsprotokoll wird dabei nicht beeinflusst, sondern wird gekapselt im Netzwerkprotokoll übertragen. Die hohe geforderte Sicherheit kann somit unter optimaler Ausnutzung der Bandbreite des Netzwerkes gewährleistet werden, wodurch auch sichergestellt ist, dass die Übertragungszeiten der sicheren Nachrichten dem Netzwerkprotokoll entsprechend zuverlässig so kurz wie möglich sind. Damit kann somit auch eine 1:n- oder n:1-Beziehung zwischen Sicherheitsframe und Netzwerkprotokollframe realisiert werden, was auch die Flexibilität der Datenübertragung erhöht.

Vorteilhaft wird die Sender-Optimierungseinrichtung im Datensender und/oder die Empfänger-Optimierungseinrichtung im Datenempfänger integriert angeordnet, wobei natürlich eine Einheit in der Anordnung sowohl Datensender, als auch Datenempfänger sein kann und somit in der Einheit beide Einrichtungen enthalten sein können.

Wenn eine Anzahl von Datensender und/oder Datenempfänger über einen Datenbus mit einer Sende-Optimierungseinrichtung und/oder einer Empfänger-Optimierungseinrichtung verbunden sind, ist es möglich für eine Vielzahl von Sendern oder Empfängern nur eine einzige Sende-Optimierungseinrichtung und/oder einer Empfänger-Optimierungseinrichtung vorzusehen, was den Aufwand für den einzelnen Sender oder Empfänger reduziert. Damit muss nur mehr eine Einheit (die Netzanbindungseinheit mit der Sende-Optimierungseinrichtung und/oder der Empfänger-Optimierungseinrichtung) Kenntnis über das implementierte Netzwerkprotokoll haben, wohingegen die einzelnen Sender bzw. Empfänger alle mit einem spezifizierten Datenbusprotokoll (das ein vom Netzwerk unabhängiges Protokoll sein kann) ausgeführt sind und folglich einheitlich sind.

Die verfügbare Bandbreite des Netzwerkprotokolls kann noch besser ausgenutzt werden, wenn die Sender-Optimierungseinrichtung in ein netzwerkprotokollspezifisches Datenpaket auch nicht sichere Daten einfügt, da man damit in der Erstellung der Datenpakete noch flexibler ist.

Die gegenständliche Erfindung wird nachfolgend anhand der nicht einschränkenden, beispielhaften
Fig. 1, die eine Anordnung zur sicheren Datenkommunikation über ein nicht sicheres Netzwerk,
Fig. 2, die eine weitere erfindungsgemäße Anordnung,
Fig. 3, die noch eine weitere erfindungsgemäße Anordnung,
Fig. 4, die schematisch den Datentransport über das Netzwerk und
Fig. 5, die ein weiteres Beispiel eines Datentransports über das Netzwerk
zeigen und jeweils ein vorteilhaftes Ausführungsbeispiel darstellen, beschrieben.

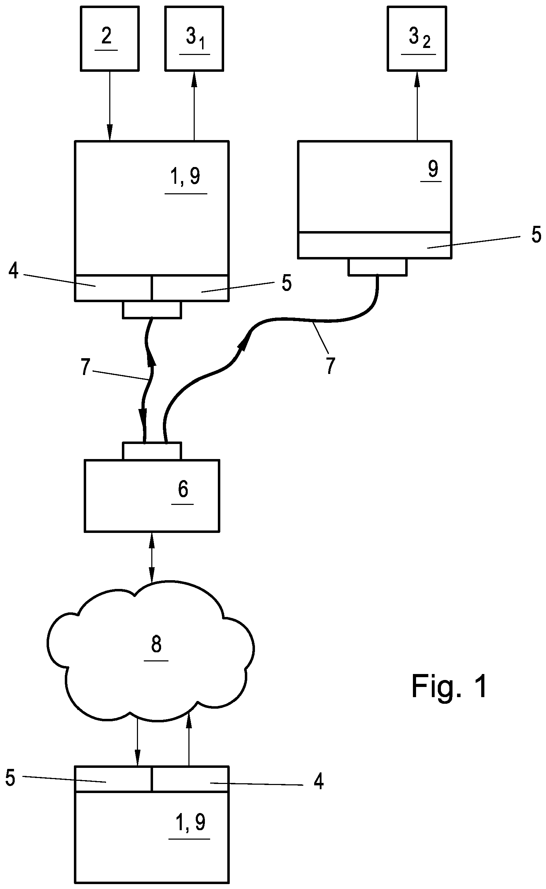

In Fig. 1 ist stark schematisiert eine Anordnung zur sicheren Datenkommunikation von einem sicheren Datensender 1 zu einem sicheren Datenempfänger 9 über ein nicht sicheres Netzwerk 8 dargestellt. Der sichere Datensender 1, hier z.B. eine I/O-Einheit kann über einen sicheren Eingang sichere Signale von einem Sensor 2, z.B. ein Not-Stop-Schalter, eine Lichtschranke, ein Geschwindigkeits- oder Positionssensor einer Motorregelung, etc., empfangen und sichere Signale über einen sicheren Ausgang an einen sicheren Aktuator 3, wie z.B. ein Schalter, eine Motorsteuerung, etc., senden. Eine solche I/O-Einheit hat in der Regel mehrere sichere Ein- und Ausgabekanäle, sodass daran eine Reihe von Sensoren 2 und Aktuatoren 3 angeschaltet werden können. Es ist aber natürlich ebenso denkbar, dass eine I/O-Einheit nur einen sicheren Eingang oder Ausgang hat oder dass an der I/O-Einheit neben sicheren Ein- oder Ausgängen auch eine Reihe nicht sichere Ein- oder Ausgänge vorhanden sind.

Die von einem sicheren Eingang einer I/O-Einheit empfangen Daten sollen über ein Netzwerk 8 an einen sicheren Datenempfänger 9, z.B. ein sicheres Steuergerät, gesendet werden. Die empfangenen Signale können dabei in der I/O-Einheit 1 natürlich bei Bedarf noch bearbeitet, z.B. konditioniert, digitalisiert, gefiltert, etc., werden. Die Daten werden dabei über das nicht sichere Netzwerk, wie z.B. Ethernet, LAN, WAN, VPN, Modemverbindung, etc., mit einem beliebigen nicht sicheren Datenkommunikationsprotokoll, wie z.B. TCP/IP, CAN, ProfiBus, Ethernet Powerlink, übertragen. Für jedes dieser Datenkommunikationsprotokolle ist ein Datenpaket mit einer gewissen Anzahl von Nutzdaten und anderen Daten spezifiziert. Zusammen mit den elektrischen Spezifikationen des Datenkommunikationsprotokolls ergibt sich daraus eine gewisse verfügbare Bandbreite für die Datenübertragung. Die Datenpaketgrößen variieren dabei zwischen einigen Bytes und einigen Kilobytes. Je nach Länge eines sicheren Datums würde nun ein solches nicht sicheres Datenpaket beim Übertragen des sicheren Datums mehr oder weniger gut ausgenutzt werden, je nachdem wie viele der verfügbaren Nutzdaten durch das sichere Datum benötigt werden. Insbesondere bei Kombinationen wie sehr kurze sichere Daten (z.B. einige Bytes) mit einem Datenkommunikationsprotokoll mit Datenpaketen mit sehr langen Nutzdatenlängen (z.B. einige Kilobytes) wird die theoretisch verfügbare Bandbreite des Datenkommunikationsprotokolls nur sehr schlecht ausgenutzt.

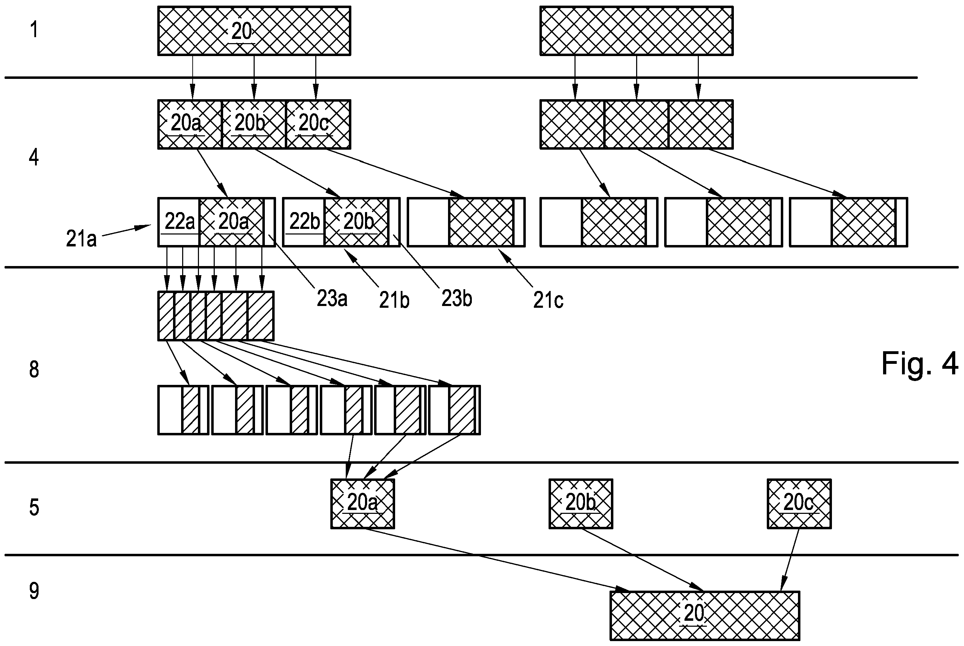

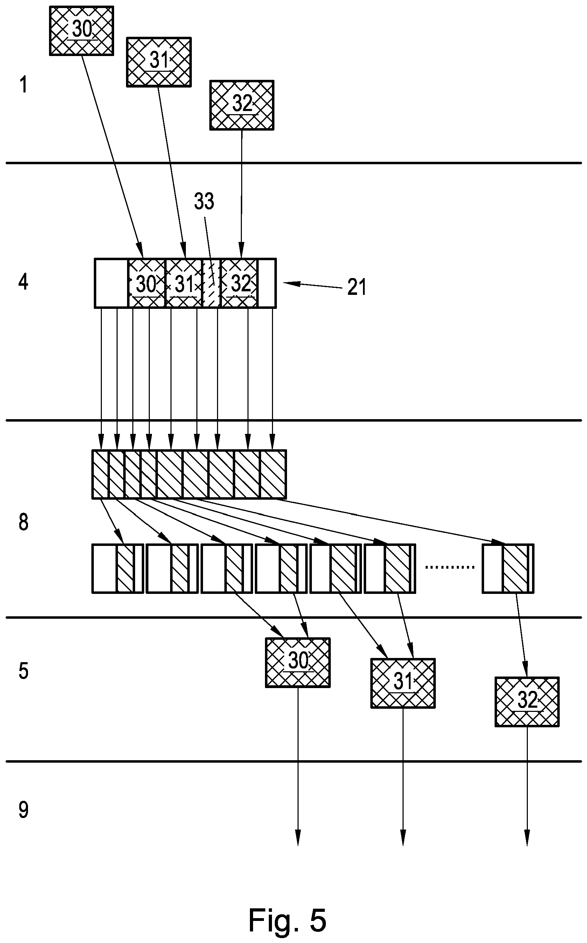

Um die verfügbare Bandbreite eines gegebenen Datenkommunikationsprotokolls über das Netzwerk 8 (Netzwerkprotokoll) bestmöglich auszunutzen, ist nun auf der Senderseite eine Sender-Optimierungseinheit 4 vorgesehen. Diese Sender-Optimierungseinheit 4 ist in diesem Ausführungsbeispiel in die I/O-Einheit 1 integriert und, z.B. über ein herkömmliches Netzwerkkabel 7, mit dem Netzwerk 8 verbunden. Die Sender-Optimierungseinheit 4 kennt den spezifizierten Datenpaketaufbau des verwendeten Netzwerkprotokolls, z.B. TCP/IP, und ist somit netzwerkprotokollabhängig. Die Sender-Optimierungseinheit 4 ist somit in der Lage, die verfügbare Datenpaketlänge des vorgegebenen Netzwerkprotokolls bestmöglich auszunutzen. Dazu werden die einzelnen zu übertragenden sicheren Daten in einem Datenpaket zusammengefasst oder ein sicheres Datum auf mehrere Datenpakete aufgeteilt, wie im Detail weiter unten anhand der Fig. 4 und 5 beschrieben.

Die Daten werden über das Netzwerk 8 an den sicheren Datenempfänger 9 gesendet. Dazu ist auf der Empfängerseite eine Empfänger-Optimierungseinrichtung 5 vorgesehen, z.B. wie in diesem Ausführungsbeispiel im Datenempfänger 9 integriert. Die Empfänger-Optimierungseinrichtung 5 extrahiert aus dem Netzwerk spezifischen Datenpaketen die sicheren Daten oder setzte diese wieder entsprechend zusammen, wie im Detail weiter unten anhand der Fig. 4 und 5 beschrieben. Der Datenempfänger 9, z.B. ein sicheres Steuergerät, kann die empfangenen sicheren Daten nun entsprechend verarbeiten und an eine weitere Einheit versenden. Der Datenempfänger 9 wird somit zum Datensender, wie oben beschrieben.

Eine Einheit in der Anordnung zur Datenkommunikation ist somit in der Regel gleichzeitig Datensender 1 und Datenempfänger 9. Es sind aber auch reine Datensender 1 oder reine Datenempfänger 9 (wie in Fig. 1 angedeutet) denkbar.

Z.B. könnte ein Sensor 2, wie ein Not-Stopp-Schalter, einen Schaltzustand mit der I/O-Einheit, die als sicherer Datensender 1 fungiert, über das Netzwerk 8 zu einem sicheren Datenempfänger 9, wie ein sicheres Steuergerät, gesendet werden. Dort kann das empfangene Signal (Schaltzustand) verarbeitet werden und eine entsprechende Reaktion gesetzt werden. Dazu können entsprechende Daten vom Steuergerät, das nun als Datensender 1 fungiert, wiederum über das Netzwerk 8 und I/O-Einheiten, die nun als Datenempfänger 9 fungieren, an eine Anzahl von Aktuatoren 3₁, 3₂, z.B. Schalter die bestimmte Stromkreise unterbrechen, gesendet werden.

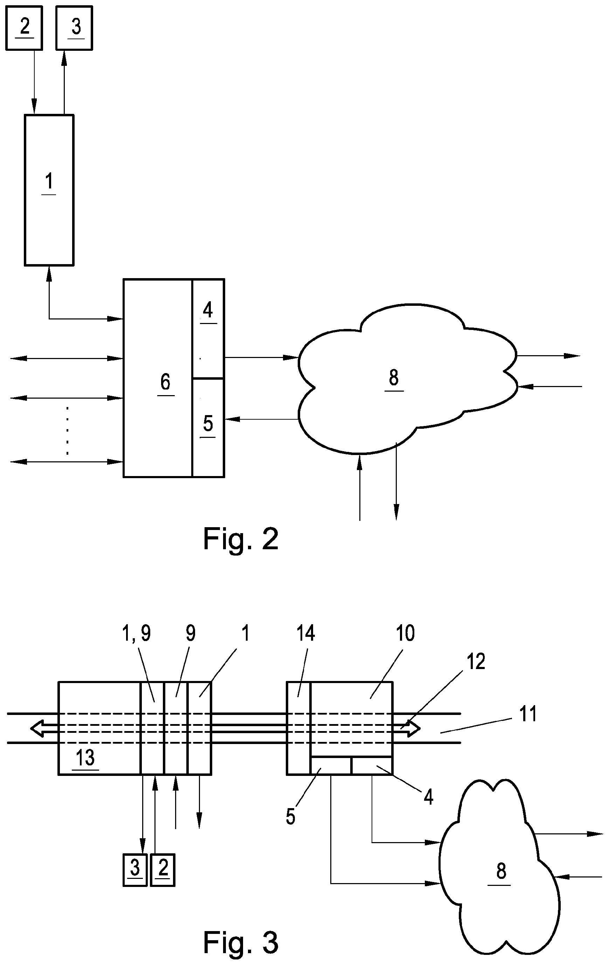

Auf Sender- und/oder Empfängerseite kann außerdem auch ein hinlänglich bekannte Netzwerkankopplungseinheit, wie z.B. ein Router 6, vorgesehen sein. In diesem Fall wäre der sichere Datensender 1 und/oder der sichere Datenempfänger 9 nicht direkt mit dem Netzwerk 8 verbunden, sondern über die Netzwerkankopplungseinheit. Ebenfalls wäre es in diesem Beispiel möglich, dass die Sender-Optimierungseinheit 4 und/oder die Empfänger-Optimierungseinheit 5 in der Netzwerkankopplungseinheit integriert ist und der Datensender 1 und/oder der Datenempfänger 9 folglich keine eigene Sender-Optimierungseinheit 4 und/oder Empfänger-Optimierungseinheit 5 benötigen, wie in Fig. 2 anhand eines Routers 6 schematisch dargestellt.

Fig. 3 beschreibt eine weitere mögliche Anordnung zur sicheren Datenkommunikation über ein nicht sicheres Netzwerk 8. In diesem Beispiel ist eine Backplane 11 vorgesehen, auf der eine Reihe von Einheiten nebeneinander angeordnet sind. Auf der Backplane 11 sind eine Anzahl von sicheren Datensendern 1 und sicheren Datenempfängern 9, sowie kombinierte Sender-/Empfängereinheiten, angeordnet, wie z.B. sichere I/O-Einheiten, Steuergeräte, etc. Ebenso könnten auf der Backplane 11eine Anzahl von nicht sicheren Datensendern und/oder -empfängern 14 angeordnet sein. Die sicheren Datensender/-empfänger 1, 9 und gegebenenfalls die nicht sicheren Datensender/-empfänger 14 sind untereinander und mit einer Netzwerkanbindungseinheit 10 über einen (seriellen oder parallelen) Datenbus 12 verbunden. Die sicheren Datensender/-empfänger 1, 9 und gegebenenfalls die nicht sicheren Datensender/-empfänger 14 kommunizieren über diesen Datenbus 12 untereinander und mit der Netzwerkanbindungseinheit 10 mit einem gewählten Busprotokoll, wie z.B. CAN, TCP/IP, etc., miteinander, wobei das Busprotokoll verschieden vom Netzwerkprotokoll 8 sein kann. Die Netzwerkanbindungseinheit 10 ist über eine Sender-Optimierungseinheit 4 und/oder einer Empfänger-Optimierungseinheit 5 direkt oder indirekt über eine Netzwerkankopplungseinheit mit dem Netzwerk 8 verbunden. Wenn ein Datensender 1 Daten über das Netzwerk 8 versenden will, sendet er zuerst die Daten über den Datenbus 12 mit dem Busprotokoll an die Netzwerkanbindungseinheit 10, die die Daten empfängt und über die Sender-Optimierungseinheit 4 unter bestmöglicher Ausnutzung der Bandbreite des Netzwerkprotokolls über das Netzwerk 8 versendet. Der Empfang von Daten erfolgt entsprechend umgekehrt. Bei einer solchen Anordnung könnte auch vorgesehen sein, dass die nebeneinander angeordneten sicheren Datensender/-empfänger 1, 9 und gegebenenfalls die nicht sicheren Datensender/-empfänger 14 direkt miteinander über das Busprotokoll kommunizieren und nicht der Umweg über das Netzwerk 8 gemacht wird, was wiederum Netzwerkbandbreite verbrauchen würde. Die Einheiten auf der Backplane 11 könnten dabei auch von einer zentralen Energieversorgungseinheit 13, die auch auf der Backplane 11 angeordnet sein kann, mit Energie versorgt werden.

Die Figs. 4 und 5 zeigen, wie eine Sender-Optimierungseinheit 4 und eine Empfänger-Optimierungseinheit 5 arbeiten kann. Ein sicheres Datum 20, 30 enthält neben den eigentlichen Nutzdaten, z.B. ein Schaltstellung, eine Motorgeschwindigkeit, etc., auch eine Reihe von anderen Daten, wie z.B. die notwendigen Sicherheitsmechanismen (CRC, doppelte Nutzdaten, Zähler, Zeitreferenzen, etc.), Header, Abschluss-, Statusdaten, etc., gemäß den Spezifikationen des implementierten Sicherheitsprotokolls.

Gemäß Fig. 4 wird ein sicheres Datum 20, das ein sicherer Datensender 1 z.B. von einem Sensor 2 erhalten haben kann und das zu lange wäre, um in den Nutzdaten einer Netzwerknachricht übertragen werden zu können, von der Sender-Optimierungseinrichtung 4 auf eine Anzahl (hier drei) kleinerer Datensegmente 20a, 20b, 20c aufgeteilt, so dass Datenpakete 21 entstehen, die die verfügbare Nutzdatenlänge des Netzwerkprotokolls optimal ausnutzen. Aufgrund des netzwerkprotokollabhängigen Overheads 22, 23 der Datenpakete 21 der zu übertragenden Daten, z.B. durch Header, Abschlussdaten, Zählern, Statusdaten, CRC, etc., ist es für die Ausnutzung der Bandbreite von Vorteil, wenn die Länge der Nutzdaten entsprechend länger ist, als die Anzahl der Overheadbytes. Das zu übertragende Datum 20 kann zum Beispiel gleichmäßig auf mehrere Datensegmente 20a, 20b, 20c aufgeteilt werden, oder es könnte vorgesehen sein, dass möglichst viele Datenpakete 21 mit maximaler Ausnutzung der Nutzdaten erzeugt werden. Die Sender-Optimierungseinrichtung 4 erzeugt aus den Datensegmenten 20a, 20b, 20c also Datenpakete 21 a, 21 b, 21 c mit dem netzwerkprotokollspezifischen Overhead 22a, 23a, 22b, 23b, die an das Netzwerk 8 zur Übermittlung an den Datenempfänger 9 gesendet werden. Das Netzwerk 8 kann die Datenpakete 21 selbstständig nach einem beliebigen Schema übertragen (z.B. werden die Datenpakete über eine Modemstrecke anders übertragen wie über Ethernet), wie in Fig. 4 angedeutet. Es ist natürlich auch denkbar, dass unterschiedliche Netzwerktypen (z.B. Ethernet, Modem, etc.) zu einem Netzwerk 8 zusammengeschaltet werden können, sodass die Datenpakete 21 innerhalb des Netzwerkes 8 mehrmals umformatiert werden, was nach außen hin (also für die Sender-Optimierungseinrichtung 4 oder die Empfänger-Optimierungseinrichtung 5) jedoch nicht erkennbar und bedeutend ist. Wie die Datenpakete 21 innerhalb des Netzwerkes 8 übertragen werden kann nicht beeinflusst werden und ist für die gegenständliche Erfindung auch nicht wesentlich.

Die Empfänger-Optimierungseinrichtung 5 empfängt vom Netzwerk 8 die einzelnen Datenpakete 21a, 21b, 21c und entfernt den Overhead 22a, 23a, 22b, um die Datensegmente 20a, 20b, 20c zu erhalten, die anschließend wieder zum übermittelten Datum 20 zusammengesetzt werden.

Im Beispiel nach Fig. 5 werden mehrere sichere Daten 30, 31, 32, die zum Beispiel von mehreren Sensoren 2 der gleichen oder unterschiedlichen I/O-Einheit(en) empfangen werden, in der Sender-Optimierungseinrichtung 4 in einem Datenpaket 21 zusammengefasst. Das Datenpaket 21 kann neben den sicheren Daten 30, 31, 32 auch nicht sichere Daten 33 enthalten. Ein solches Vorgehen ist besonders vorteilhaft, wenn die Längen der sicheren Daten 30, 31, 32 bezogen auf die zulässige netzwerkprotokollabhängige Länge der Nutzdaten im Datenpaket 21 kurz ist und folglich mehrere solcher sicherer Daten 30, 31, 32 in einem Datenpaket 21 übertragen werden können. Auf der Empfängerseite werden die sicheren Daten 30, 31, 32 in der Empfänger-Optimierungseinrichtung 5 aus dem empfangenen Datenpaket 21 wieder extrahiert und an den Datenempfänger 9 weitergeleitet.

Es ist natürlich je nach Anwendung der Datenkommunikation auch eine Kombination der beiden oben beschrieben Methoden möglich. Da die Sender-Optimierungseinrichtung 4 bzw. die Empfänger-Optimierungseinrichtung 5 Kenntnis vom angeschalteten Netzwerkprotokoll haben muss, kann eine solche optimierte Ausnutzung der Bandbreite der Datenpakete des Netzwerkprotokolls einfach umgesetzt werden.

## Patentansprüche

1. Anordnung zur sicheren Datenkommunikation über ein nicht sicheres Netzwerk (8), mit einem sicheren Datensender (1), der sichere Daten (20, 30, 31, 32) gemäß einem Sicherheitsprotokoll gekapselt im Netzwerkprotokoll über das Netzwerk (8) an einen sicheren Datenempfänger (9) sendet, wobei das Netzwerkprotokoll ein netzwerkprotokollspezifisches Datenpaket (21) mit Nutzdaten des Netzwerkprotokolls und mit netzwerkprotokollspezifischen Daten (22, 23) definiert und sichere Daten (20, 30, 31, 32) Nutzdaten eines Sicherheitsprotokolls und Daten gemäß den Spezifikationen des Sicherheitsprotokolls, womit Fehlererkennungs- und Fehlerkorrekturmechanismen zur Gewährleistung der sicheren Datenkommunikation implementiert sind, enthalten und der sichere Datensender (1) die sicheren Daten (20, 30, 31, 32) als Nachricht des Sicherheitsprotokolls überträgt, **dadurch gekennzeichnet, dass** auf der Senderseite eine mit dem Netzwerk (8) verbundene netzwerkprotokollabhängige Sender-Optimierungseinrichtung (4) vorgesehen ist, die die sicheren Daten (20, 30, 31, 32) mit den Nutzdaten des Sicherheitsprotokolls und den Daten gemäß den Spezifikationen des Sicherheitsprotokolls vom sicheren Datensender (1) empfängt und vor der Übergabe an das Netzwerk (8) und unabhängig vom Sicherheitsprotokoll auf Nutzdaten netzwerkprotokollspezifischer Datenpakete (21) bestimmter vorgegebener Nutzdatenlängen aufteilt oder zusammenfasst, dass die netzwerkprotokollabhängige Sender-Optimierungseinrichtung (4) die netzwerkprotokollspezifischen Datenpakete (21) dann, zur Übertragung an den sicheren Datenempfänger gemäß dem Schema des Netzwerkes (8), an das Netzwerk (8) sendet und dass auf der Empfängerseite eine mit dem Netzwerk (8) verbundene netzwerkprotokollabhängige Empfänger-Optimierungseinrichtung (5) vorgesehen ist, die aus den Nutzdaten der netzwerkprotokollspezifischen Datenpaketen (21) die sicheren Daten (20, 30, 31, 32) extrahiert oder zusammensetzt und an den sicheren Datenempfänger (9) weiterleitet.

2. Anordnung nach Anspruch 1, **dadurch gekennzeichnet, dass** die Sender-Optimierungseinrichtung (4) im Datensender (1) und/oder die Empfänger-Optimierungseinrichtung (5) im Datenempfänger (9) integriert angeordnet ist.

3. Anordnung nach Anspruch 1, **dadurch gekennzeichnet, dass** auf Senderseite und/oder auf Empfängerseite eine Netzwerkankopplungseinheit (6) vorgesehen ist und die Sender-Optimierungseinrichtung (4) in der senderseitigen Netzwerkankopplungseinheit (6) und/oder die Empfänger-Optimierungseinrichtung (5) in der empfängerseitigen Netzwerkankopplungseinheit (6) integriert angeordnet ist.

4. Anordnung nach Anspruch 1, 2 oder 3, **dadurch gekennzeichnet, dass** eine Mehrzahl von Datensendern (1) und Datenempfängern (9) vorgesehen sind, die über das Netzwerk (8) miteinander kommunizieren.

5. Anordnung nach einem der Ansprüche 1 bis 4, **dadurch gekennzeichnet, dass** eine Anzahl von Datensender (1) und/oder Datenempfänger (9) über einen Datenbus (12) mit einer Sende-Optimierungseinrichtung (4) und/oder einer Empfänger-Optimierungseinrichtung (5) verbunden sind.

6. Anordnung nach Anspruch 5, **dadurch gekennzeichnet, dass** die Datensender (1), Datenempfänger (9), Sende-Optimierungseinrichtung (4) und/oder Empfänger-Optimierungseinrichtung (5) über den Datenbus (12) über ein vom Netzwerk (8) unabhängiges Protokoll miteinander kommunizieren.

7. Anordnung nach einem der Ansprüche 1 bis 6, **dadurch gekennzeichnet, dass** die Sender-Optimierungseinrichtung (4) in ein netzwerkprotokollspezifisches Datenpaket (21) auch nicht sichere Daten (33) einfügt.

8. Verfahren zum Senden von sicheren Daten (20, 30, 31, 32) über ein nicht sicheres Netzwerk (8) mit einem Netzwerkprotokoll, das ein netzwerkprotokollspezifisches Datenpaket (21) mit Nutzdaten des Netzwerkprotokolls und mit netzwerkprotokollspezifischen Daten (22, 23) definiert, wobei sichere Daten (20, 30, 31, 32) Nutzdaten eines Sicherheitsprotokolls und Daten gemäß den Spezifikationen des Sicherheitsprotokolls, womit Fehlererkennungs- und Fehlerkorrekturmechanismen zur Gewährleistung der sicheren Datenkommunikation implementiert werden, enthalten und die sicheren Daten (20, 30, 31, 32) als Nachricht des Sicherheitsprotokolls übertragen werden, wobei die sicheren Daten (20, 30, 31, 32) gekapselt im Netzwerkprotokoll über das nicht sichere Netzwerk (8) von einem sicheren Datensender (1) an einen sicheren Datenempfänger (9) gesendet werden, **dadurch gekennzeichnet, dass** auf der Senderseite die sicheren Daten (20, 30, 31, 32) mit den Nutzdaten des Sicherheitsprotokolls und den Daten gemäß den Spezifikationen des Sicherheitsprotokolls vom sicheren Datensender (1) empfangen und in einer mit dem Netzwerk (8) verbundenen netzwerkprotokollabhängigen Sender-Optimierungseinrichtung (4) unabhängig vom Sicherheitsprotokoll und vor der Übergabe an das Netzwerk (8) auf Nutzdaten von netzwerkspezifischen Datenpaketen (21) bestimmter vorgegebener Nutzdatenlängen aufgeteilt oder in Nutzdaten eines netzwerkprotokollspezifischen Datenpakets (21) zusammengefasst werden, die Datenpakete (21) dann von der netzwerkprotokollabhängigen Sender-Optimierungseinrichtung (4) an das Netzwerk (8) zur Übermittlung an den sicheren Datenempfänger über das Netzwerk (8) gesendet werden und die netzwerkprotokollspezifischen Datenpakete (21) über das nicht sichere Netzwerk (8) gemäß dem Schema des Netzwerkes (8) übertragen werden **und dass** auf der Empfängerseite die sicheren Daten (20, 30, 31, 32) in einer mit dem Netzwerk (8) verbundene netzwerkprotokollabhängigen Empfänger-Optimierungseinrichtung (5) aus den Nutzdaten der empfangenen netzwerkprotokollspezifischen Datenpaketen (21) extrahiert oder zusammengesetzt und an den sicheren Datenempfänger (9) weitergeleitet werden.

9. Verfahren nach Anspruch 8, **dadurch gekennzeichnet, dass** eine Anzahl von Datensender (1) und/oder Datenempfänger (9) über einen Datenbus (12) mit einer Sende-Optimierungseinrichtung (4) und/oder einer Empfänger-Optimierungseinrichtung (9) verbunden werden.

10. Verfahren nach Anspruch 9, **dadurch gekennzeichnet, dass** die Datensender (1), Datenempfänger (9), Sende-Optimierungseinrichtung (4) und/oder Empfänger-Optimierungseinrichtung (4) über den Datenbus (12) über ein vom Netzwerk (8) unabhängiges Protokoll miteinander kommunizieren.

11. Anordnung nach einem der Ansprüche 8 bis 10, **dadurch gekennzeichnet, dass** die Sender-Optimierungseinrichtung (4) in ein netzwerkprotokollspezifisches Datenpaket (21) auch nicht sichere Daten (33) einfügt.

## Claims

1. Arrangement for safe data communication via a non-safe network with a safe data transmitter (1) that transmits safe data (20, 30, 31, 32) according to a safety protocol encapsulated in the network protocol via the network (8) to a safe data receiver, wherein the network protocol defines a network protocol-specific data packet (21) with payload data of the network protocol and with network protocol-specific data (22, 23) and wherein safe data (20, 30, 31, 32) comprises payload data of a safety protocol and data in accordance to the specifications of the safety protocol, which implements error detection and error correction mechanisms to guarantee the safe data communication, and wherein the safe data transmitter (1) transmits the safe data (20, 30, 31, 32) as message of the safety protocol, **characterized in that** a network protocol-dependent transmitter optimization device (4) connected to the network (8) is provided on the transmitter side, which device receives the safe data (20, 30, 31, 32) with the payload data of a safety protocol and data in accordance to the specifications of the safety protocol from the safe data transmitter (1) and, before transfer to the network (8) and independent of the safety protocol, subdivides or combines them on payload data of network protocol-specific data packets of specific predetermined payload lengths, **that** the network protocol-dependent transmitter optimization device (4) transmits the network protocol-specific data packet (21) then to the network (8) for transmitting them to the safe data receiver in accordance to the schema of the network (8), **and that** a network protocol-dependent receiver optimization device (5) connected to the network (8) is provided on the receiver side, which device extracts or assembles the safe data (20, 30, 31, 32) from the payload data of the network protocol-specific data packets (21) and forwards these data to the safe data receiver (9).

2. Arrangement according to claim 1, **characterized in that** the transmitter optimization device (4) is arranged integrated in the data transmitter (1) and/or the receiver optimization device (5) is arranged integrated in the data receiver (9).

3. Arrangement according to claim 1, **characterized in that** a network connection unit (6) is provided on the transmitter side and/or on the receiver side and the transmitter optimization device (4) is arranged integrated in the transmitter-side network connection unit (6) and/or the receiver optimization device (5) is arranged integrated in the receiver-side network connection unit (6).

4. Arrangement according to claim 1, 2 or 3, **characterized in that** a plurality of data transmitters (1) and data receivers (9) are provided which communicate with one another via the network (8).

5. Arrangement according to one of claims 1 to 4, **characterized in that** a number of data transmitters (1) and/or data receivers (9) are connected via a data bus (12) to a transmitter optimization device (4) and/or a receiver optimization device (5).

6. Arrangement according to claim 5, **characterized in that** the data transmitters (1), data receivers (9), transmitter optimization device (4) and/or receiver optimization device (5) communicate with one another via the data bus (12) via a protocol independent of the network (8).

7. Arrangement according to one of claims 1 to 6, **characterized in that** the transmitter optimization device (4) also inserts non-safe data (33) into a network protocol-specific data packet (21).

8. Method for transmitting safe data (20, 30, 31, 32) via a non-safe network (8) with a network protocol, which defines a network protocol-specific data packet (21) with payload data of the network protocol and with network protocol-specific data (22, 23), wherein safe data (20, 30, 31, 32) comprises payload data of a safety protocol and data in accordance to the specifications of the safety protocol, which implements error detection and error correction mechanisms to guarantee the safe data communication and wherein safe data (20, 30, 31, 32) are transmitted as message of the safety protocol, whereby the safe data (20, 30, 31, 32) are transmitted encapsulated in the network protocol via the non-safe network (8) from a safe data transmitter (1) to a safe data receiver (9), **characterized in that** on the transmitter side the safe data (20, 30, 31, 32) with the payload data of the safety protocol and data in accordance to the specifications of the safety protocol are received by the safe data transmitter (1) and are divided up on payload data of network-specific data packets (21) of specific predetermined payload lengths or are combined in payload data of network-specific data packets (21) in a network protocol-dependent transmitter optimization device (4) connected to the network (8) independent of the safety protocol and before transfer to the network (8), the data packets (21) are then transmitted to the network (8) by the network protocol-dependent transmitter optimization device (4) for transmitting them to the safe data receiver via the network (8) and the network protocol-specific data packets (21) are transmitted via the non-safe network (8) in accordance to the schema of the network (8) **and that** on the receiver side the safe data (20, 30, 31, 32) are extracted or combined from the payload data of the received network protocol-specific data packets (21) in a network protocol-dependent receiver optimization device (5) connected to the network (8) and are forwarded to the safe data receiver (9).

9. Method according to claim 8, **characterized in that** a number of data transmitters (1) and/or data receivers (9) are connected via a data bus (12) to a transmitter optimization device (4) and/or a receiver optimization device (5).

10. Method according to claim 9, **characterized in that** the data transmitters (1), data receivers (9), transmitter optimization device (4) and/or receiver optimization device (5) communicate with one another via the data bus (12) via a protocol independent of the network (8).

11. Method according to one of claims 8 to 10, **characterized in that** the transmitter optimization device (4) also inserts non-safe data (33) into a network protocol-specific data packet (21).

## Revendications

1. Aménagement pour la communication de données sécurisée via un réseau non sécurisé (8), comprenant un émetteur de données sécurisé (1), qui envoie des données sécurisées (20, 30, 31, 32) selon un protocole de sécurité encapsulé dans le protocole de réseau via le réseau (8) à un récepteur de données sécurisé (9), dans lequel le protocole de réseau définit un paquet de données (21) spécifique au protocole de réseau avec des données utiles du protocole de réseau et avec des données (22, 23) spécifiques au protocole de réseau et les données sécurisées (20, 30, 31, 32) contiennent des données utiles d'un protocole de sécurité et des données selon les spécifications du protocole de sécurité, au moyen duquel des mécanismes de reconnaissance et de correction de défauts sont mis en oeuvre pour garantir la communication de données sécurisée, et l'émetteur de données sécurisé (1) transmet les données sécurisées (20, 30, 31, 32) sous la forme d'un message du protocole de sécurité, **caractérisé en ce qu'**il est prévu côté émetteur un dispositif (4) d'optimisation d'émetteur(s) fonction du protocole de réseau et relié au réseau (8), qui reçoit les données sécurisées (20, 30, 31, 32) avec les données utiles du protocole de sécurité et les données selon les spécifications du protocole de sécurité de l'émetteur de données sécurisé (1) et répartit ou regroupe avant le transfert au réseau (8) et indépendamment du protocole de sécurité en données utiles des paquets de données (21) spécifiques au protocole de réseau de certaines longueurs de données utiles prédéterminées, **en ce que** le dispositif (4) d'optimisation d'émetteur(s) fonction du protocole de réseau envoie au réseau (8) les paquets de données (21) spécifiques au protocole de réseau pour les transférer au récepteur de données sécurisé selon le schéma du réseau (8) et **en ce qu**'il est prévu côté récepteur un dispositif (5) d'optimisation de récepteur(s) fonction du protocole de réseau relié au réseau (8), lequel dispositif extrait ou regroupe des données utiles des paquets de données (21) spécifiques au protocole de réseau les données sécurisé (20, 30, 31, 32) et les transfère au récepteur de données sécurisé (9).

2. Aménagement selon la revendication 1, **caractérisé en ce que** le dispositif (4) d'optimisation d'émetteur(s) est intégré à l'émetteur de données (1) et/ou le dispositif (5) d'optimisation de récepteur(s) est intégré au récepteur de données (9).

3. Aménagement selon la revendication 1, **caractérisé en ce qu**'il est prévu côté émetteur et/ou côté récepteur une unité de couplage de réseau (6) et le dispositif (4) d'optimisation d'émetteur(s) est intégré à l'unité de couplage de réseau côté émetteur (6) et/ou le dispositif (5) d'optimisation de récepteur(s) est intégré à l'unité de couplage de réseau côté récepteur (6).

4. Aménagement selon la revendication 1, 2 ou 3, **caractérisé en ce qu**'il est prévu une pluralité d'émetteurs de données (1) et de récepteurs de données (9), qui communique les uns avec les autres via le réseau (8).

5. Aménagement selon l'une quelconque des revendications 1 à 4, **caractérisé en ce qu**'un certain nombre d'émetteurs de données (1) et/ou de récepteurs de données (9) sont reliés via un bus de données (12) à un dispositif (4) d'optimisation d'émetteur(s) et/ou à un dispositif (5) d'optimisation de récepteur(s).

6. Aménagement selon la revendication 5, **caractérisé en ce que** les émetteurs de données (1), les récepteurs de données (9), le dispositif (4) d'optimisation d'émetteur(s) et/ou le dispositif (5) d'optimisation de récepteur(s) communiquent mutuellement via le bus de données (12) sur la base d'un protocole indépendant du réseau (8).

7. Aménagement selon l'une quelconque des revendications 1 à 6, **caractérisé en ce que** le dispositif (4) d'optimisation d'émetteur(s) insère également des données non sécurisées (33) dans le paquet de données (21) spécifique au protocole de réseau.

8. Procédé d'envoi de données sécurisées (20, 30, 31, 32) via un réseau non sécurisé (8) avec un protocole de réseau qui définit un paquet de données (21) spécifique au protocole de réseau avec des données utiles du protocole de réseau et des données (22, 23) spécifiques au protocole de réseau, dans lequel des données sécurisées (20, 30, 31, 32) contiennent des données utiles d'un protocole de sécurité et des données selon les spécifications du protocole de sécurité, par lequel des mécanismes de reconnaissance et de correction de défauts sont mis en oeuvre pour garantir la communication de données sécurisées et les données sécurisées (20, 30, 31, 32) sont transférées sous la forme d'un message du protocole de sécurité, dans lequel les données sécurisées (20, 30, 31, 32) sont envoyées encapsulées dans le protocole de réseau via le réseau non sécurisé (8) par un émetteur de données sécurisé (1) à un récepteur de données sécurisé (9), **caractérisé en ce que,** côté émetteur, les données sécurisées (20, 30, 31, 32) avec les données utiles du protocole de sécurité et les données selon les spécifications du protocole de sécurité sont reçues par l'émetteur de données sécurisé (1) et réparties dans un dispositif (4) d'optimisation d'émetteur(s) fonction du protocole de réseau lié au réseau (8) indépendamment du protocole de sécurité et avant le transfert au réseau (8) en données utiles de paquets de données (21) spécifiques au réseau de certaines longueurs de données utiles prédéterminées ou sont regroupées en données utiles d'un paquet de données (21) spécifique au protocole de réseau, les paquets de données (21) sont alors envoyés par le dispositif (4) d'optimisation d'émetteur(s) fonction du protocole de réseau au réseau (8) pour les transférer au récepteur de données sécurisé via le réseau (8) et les paquets de données (21) spécifiques au réseau sont transférés via le réseau non sécurisé (8) selon le schéma du réseau (8) et **en ce que,** côté récepteur, les données sécurisées (20, 30, 31, 32) sont extraites ou regroupées dans un dispositif (5) d'optimisation de récepteur(s) fonction du protocole de réseau lié au réseau (8) en données utiles des paquets de données (21) spécifiques au protocole de réseau reçus et sont transférées au récepteur de données sécurisé (9).

9. Procédé selon la revendication 8, **caractérisé en ce qu'**un certain nombre d'émetteurs de données (1) et/ou de récepteurs de données (9) sont liés via un bus de données (12) à un dispositif (4) d'optimisation d'émetteur(s) et/ou d'un dispositif (9) d'optimisation de récepteur(s).

10. Procédé selon la revendication 9, **caractérisé en ce que** les émetteurs de données (1), les récepteurs de données (9), le dispositif (4) d'optimisation d'émetteur(s) et/ou le dispositif (4) d'optimisation de récepteur(s) communiquent les uns avec les autres via le bus de données (12) sur la base d'un protocole indépendant du réseau (8).

11. Procédé selon l'une quelconque des revendications 8 à 10, **caractérisé en ce que** le dispositif (4) d'optimisation d'émetteur(s) insère également des données non sécurisées (33) dans un paquet de données (21) spécifique au protocole de réseau.
